(19) Europäisches Patentamt / European Patent Office / Office européen des brevets

(11) **EP 3 036 902 B1**

(12) **EUROPEAN PATENT SPECIFICATION**

(45) Date of publication and mention
of the grant of the patent:
**12.07.2017 Bulletin 2017/28**

(21) Application number: **13782843.0**

(22) Date of filing: **23.08.2013**

(51) Int Cl.:
*H04N 13/04* (2006.01)      *G02B 5/02* (2006.01)
*G02B 27/22* (2006.01)

(86) International application number:
**PCT/IB2013/056842**

(87) International publication number:
**WO 2015/025196 (26.02.2015 Gazette 2015/08)**

(54) **METHOD FOR AUTOSTEREOSCOPIC PROJECTION DISPLAYS**

VERFAHREN FÜR AUTOSTEREOSKOPISCHE PROJEKTIONSANZEIGEN

PROCÉDÉ POUR AFFICHAGES AUTO-STÉRÉOSCOPIQUES PAR PROJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2016 Bulletin 2016/26**

(73) Proprietor: **KOC Universitesi
34450 Istanbul (TR)**

(72) Inventor: **ELDES, Osman
16310 Bursa (TR)**

(74) Representative: **Dericioglu Kurt, Ekin
Ankara Patent Bureau Limited
Bestekar Sokak No: 10
Kavaklidere
06680 Ankara (TR)**

(56) References cited:
**EP-A1- 2 061 261      DE-A1- 19 737 449
US-A1- 2010 253 916**

**Description**

*Technical Field of the Invention*

The present invention is in the field of autostereoscopic displays. It relates to a method of creating dynamic exit pupils according to the viewer's position, and presenting the stereo images to the viewer.

*Backgrouud of the Invention*

*Autostereoscopic displays create virtual viewing windows, through which intended perspective images can be presented. Through these viewing windows, right and left eye of the viewer see different images, and perceive stereo image without the need of glasses. There are several different methods to create virtual viewing windows. These methods utilize parallax barrier, lenticular lenslet, Fresnel lens (pupil forming screen), retro-reflective light diffusing material, or light shaping diffuser (LSD) technology.*

In parallax barrier based displays, right and left eye images are interlaced in columns on the display, typically an LCD display. A parallax barrier is positioned in front of the display so that it creates vertical viewing windows for right eye and left eye, separately. Created right and left eye viewing windows are repeated horizontally along the viewer's space. Thus, as long as the viewer's right eye is in the right eye viewing window, and left eye is in the left eye viewing window, the viewer perceives 3D. U.S. Patent No. 6,459,532 is an example of the parallax barrier method. It must be noted that this is not the only way of parallax barrier usage.

Lenticular screens can be used as in parallax barrier case. The horizontally interlaced right and left images on the display are diffused by the lenticular screen so that right eye image pixels can be seen only in the right eye viewing windows and left eye image pixels can be seen only in the left eye viewing windows. Thus, viewer can perceive 3D as long as viewer's right and left eye are in the corresponding viewing windows. U.S. Patent No. 6,069,650 utilizes the mentioned method.

Another usage of lenticular screens in autostereoscopic displays is based on the optical property that lenticular screens can be used to retro-reflect projected light back to the source, horizontally. U.S. Patent No. 7,874,678 describes a lenticular lenslet based display method which utilizes the mentioned optical property. Since each single lenticule in lenticular screen focuses light in only one direction, which is horizontal direction in the mentioned patent, lenticular screen creates vertical viewing windows, in which the image projected by the corresponding projector is presented. By placing multiple projectors, which are horizontally apart from each other, not more than an average human interpupillary distance (approximately 65 mm), multiple vertical viewing windows are created in the viewer's space. Through each vertical viewing window, the perspective image projected by the corresponding projector can be seen. Thus, the viewer perceives stereo images in the viewer's space. It must be noted that instead of placing multiple projectors horizontally apart from each other, two projector could be used and horizontally move according to the position of viewer.

Another usage of lenticular screens is placing a diffuser between two lenticular screens, as in U.S. Patent No. 5,703,717. The constructed screen is called as double lenticular screen and it is used in the rear projection displays. A projector projects image onto the double lenticular screen. The lenticular screen, in the projector side, focuses light as thin vertical stripes onto the diffuser. The lenticular screen, in the viewer side, diffuses vertical stripes on the diffuser, such that the projected image can be seen only in a narrow vertical viewing window. Thus, by placing multiple projectors horizontally apart from each other and creating multiple viewing windows, or by moving two projectors according to the position of viewer, viewer can perceive 3D.

In fresnel lens based displays, a vertical diffuser is placed onto Fresnel lens, U.S. Patent No. 7,699,472 B2. The Fresnel lens focuses the projected image by projector, and then diffuser diffuses this focused image into a vertical viewing window. By placing multiple projectors horizontally apart from each other or by moving two projectors according to the position of viewer, viewer can perceive 3D through these created viewing windows. It must be noted that this is not the only method to make use of Fresnel lens in autostereoscopic displays.

A retro-reflective light diffusing material can also be used to create viewing slits to present stereo images as disclosed in U.S. Patent No. 7,993,016 B2. A retro-reflective diffusing material consists of a retro-reflector sheet and a light diffusing sheet which diffuses light in one direction much more than the other directions. A retro-reflector reflects incident light back to the source. If a projector projects image onto a retro-reflector, retro-reflector forms an exit pupil at the same position as the projection lens. In order to see the projected image, the viewer must look through the created exit pupil, but it is impossible for two objects, eye of the viewer and projection lens, to occupy same position in space. By placing a vertical diffuser before the retro-reflector, exit pupil is expanded in the vertical direction. Thus, anyone looks through vertically expanded exit pupil, called vertical viewing slit, can see the projected image. By placing multiple projectors horizontally apart from each other, as in aforementioned patent, or by moving two projectors according to the position of the viewer, viewer can perceive 3D in a comfortable viewing area.

EP2061261 publication discloses an invention related to stereo projection systems for displaying stereopaired images on mirror-spherical or parabolic screens and for collectively watching a stereo effect without using stereo spectacles. Said invention makes it possible to continuously dynamically superimpose the projections of the left and right picture frames of a stereopair with the user's left and right eyes, respectively. Such impositions are carried out simultaneously and independently for each viewer.

*In all methods mentioned so far, except parallax barrier method, in order to present stereoscopic images to the viewer in a comfortable viewing area, either multiple projectors must be used or projectors must move according to the position of the viewer. These solutions have some drawbacks. In multiple projector method, using many projectors will cause high cost, complex system structure, and image registration problem. In the case of moving projectors, image registration problem, which is the problem of projecting images on the substantially overlapping areas of the screen, and correcting the image distortions, will occur in every movement of projectors.* Another problem with the multiple projector method and the parallax barrier method is that they create discrete viewing windows. Thus, when the viewer changes its position, viewer experiences discrete transitions between viewing windows, and it causes unnatural 3D experience. Therefore, an autostereoscopic display method, which aims to solve all aforementioned problems and presents a high quality 3D experience, is necessary.

## Brief Description of the Invention

The present invention, which is set out in the claims, is in the field of autostereoscopic displays. It relates to a device for forming dynamic exit pupils by a transfer screen according to the viewer's position, and presenting the stereo images to the viewer. By the present invention, the viewer perceives stereo images in a comfortable viewing field without need of any glasses, or so.

The device of the present invention is based on the forming slit shaped exit pupils according to the position of viewer. Slit shaped exit pupils will be called as viewing slits in the present invention. In autostereoscopic display literature, there are several different transfer screens which can create fixed viewing slits. A transfer screen can be thought as a special imaging system, which both images and diffuses at the same time. It images projection lens of the projector used in the display, and diffuses this image in one axis, its major diffusing axis, much more than its orthogonal axis, minor diffusing axis. Thus, it forms a slit shaped exit pupil, so called viewing slit, through which image information, projected by the projector on the transfer screen, can be observed. The formed viewing slit is parallel to the major diffusing axis of the transfer screen, it has a virtual anchor point which is anchored to the spatial position of image of projection lens and it is free to rotate around its anchor point. Some transfer screen examples are lenticular screen in front of a reflective back surface (U.S. Patent No. 7,874,678), double lenticular screen (U.S. Patent No. 5,703,717), single axis diffuser in front of a fresnel lens (U.S. Patent No. 7,699,472 B2), and retro-reflective light diffusing material (U.S. Patent No. 7,993,016 B2).

In the device of present invention, two projectors are placed apart from each other by the average human interpupillary distance, while one of projectors, right eye projector, projects right image of stereo image pair, and the other, left eye projector, projects left image of stereo image pair onto the transfer screen. The transfer screen forms two viewing slits, as mentioned in the previous paragraph. One of them is coupled with the right eye projector, and the other one is coupled with the left eye projector. Since the distance between projection lenses' of projectors is fixed to the interpupillary distance, and each formed viewing slit has the virtual anchor point which is the image of corresponding projection lens, the distance between right and left eye viewing slits is also interpupillary distance. Thus, right and left eyes of the viewer can fit into right and left eye viewing slits, respectively, and viewer perceives stereo image by looking through these viewing slits. Since the distance between projectors are fixed, changing the direction of major diffusing axis of transfer screen, that is to say the direction of viewing slits, doesn't change the distance between viewing slits along the axis on which projection lenses of projectors are aligned. This permits to change the direction of major diffusing axis, that is to say the direction of viewing slits, and create viewing slits according to the position of the viewer. In the present invention, a head-tracker unit (H) locates the position of viewer's eyes, a mechanical unit (M) rotates the transfer screen around its center, according to the position information of viewer's eyes, such that right and left eye viewing slits are also rotated around virtual anchor points and formed on the right and left eye of the viewer, respectively. Thus, viewing slits dynamically track the viewer (460) in a large viewing field (880), and the viewer perceives stereo images without need of wearing any glasses, or so.

The present invention has advantages over conventional autostereoscopic projection displays in terms of number of projectors, transition between different perspectives, and the image registration on the screen. The present invention employs two projectors rather than an array of projectors, which decreases the cost, and complexity of the display. In the present invention, there is no loss of 3D vision and discrete transition between different perspectives when the viewer changes his position. In the present invention, since neither projectors nor screen make translational movement, projected images are always overlapped on the screen, and no distortion correction is required.

**Brief Description of the Drawings**

- Figure 1 illustrates the effect of a single axis light diffuser over an incident light
- Figure 2 illustrates the imaging of a light source by a reflective imaging lens
- Figure 3 illustrates the forming of a slit shaped exit pupil, so called viewing slit, by a reflective transfer screen, which is composed of a single axis light diffuser shown in Figure 1, and a reflective imaging lens shown in Figure 2, for a front-projection system
- Figure 4 illustrates the forming of viewing slit pair through which stereo image pair can be perceived.
- Figure 5 is the front view of the illustration in Figure 4, when major diffusing axis of the transfer screen is parallel to y-axis of coordinate system.
- Figure 6 illustrates a preferred embodiment of present invention for a front projection system.
- Figure 7 illustrates the angular position of viewer's eyes relative to the projectors.
- Figure 8 is the front view of the preferred embodiment when the major diffusing axis of transfer screen is no longer parallel to the y axis of coordinate system.
- Figure 9 illustrates 6 different cases for the viewer's position, and corresponding positions of viewing slits. Thus, it illustrates the created viewing field of preferred embodiment, in which viewer perceives 3D without wearing any glasses, or so.
- Figure 10 illustrates another embodiment of present invention for the back projection system.
- Figure 11 illustrates another embodiment of present invention, employing active transfer screen.

The reference numbers as used in figures possess the following meanings;

| | |
|---|---|
| Incident light ray | **(105)** |
| Major diffusing axis | **(110)** |
| Output light ray | **(115)** |
| Single axis light diffuser | **(120)** |
| Diffused light | **(125)** |
| Diffusing angle in major axis | **(130)** |
| Diffusing angle in minor axis | **(135)** |
| Reflective imaging lens | **(220R)** |
| Transmissive imaging lens | **(220T)** |
| Light source / object | **(240)** |
| Image of light source / object | **(245)** |
| | |
| Transfer screen | **(320)** |
| Viewing slit, Exit pupil | **(325)** |
| Right eye viewing slit | **(325R)** |
| Left eye viewing slit | **(325L)** |
| Right eye projector | **(440R)** |
| Left eye projector | **(440L)** |
| Projection lens of Right eye projector | **(445R)** |
| Projection lens of Left eye projector | **(445L)** |
| Direction of rotation | **(450)** |
| Viewer | **(460)** |
| Right eye of the viewer | **(460R)** |
| Left eye of the viewer | **(460L)** |
| Center line of right eye viewing slit | **(525R)** |
| Center line of left eye viewing slit | **(525L)** |
| Axis of projectors | **(575P)** |
| Axis of viewer's eyes | **(575E)** |
| Reference axis | **(770)** |
| Projector-eye axis | **(780)** |

(continued)

| | |
|---|---|
| Angle between reference and projector-eye axis | (α) |
| Viewer in case A | (460A) |
| Viewer in case B | (460B) |
| Viewer in case C | (460C) |
| Viewer in case A' | (460A') |
| Viewer in case B' | (460B') |
| Viewer in case C' | (460C') |
| Major diffusing axis for case A and A' | (110A) |
| Major diffusing axis for case B and B' | (110B) |
| Major diffusing axis for case C and C' | (110C) |
| Viewing field | (990) |
| Liquid Crystal Display | (LCD) |
| | |
| *Head-tracker Unit* | *(H)* |
| *Control electronics* | *(C)* |
| *Mechanical Unit* | *(M)* |
| Coordinate System | (K) |

## Detailed Description of the Invention

The present invention is in the field of autostereoscopic displays. It relates to a method of forming dynamic exit pupils (325) by a transfer screen (320) according to the viewer's position, and presenting the stereo images to the viewer. By the present invention, the viewer perceives stereo images in a comfortable viewing field (990) without need of any glasses, or so.

### 1) Forming Viewing Slits by The Transfer Screen

In order to understand the present invention, one must know how an exit pupil (325), so called viewing slit (325), is formed by a transfer screen (320), and what properties it has. Thus, in this section, the formation of viewing slits by the transfer screen (320) will be explained. In the next section, the present invention will be explained according to a preferred embodiment.

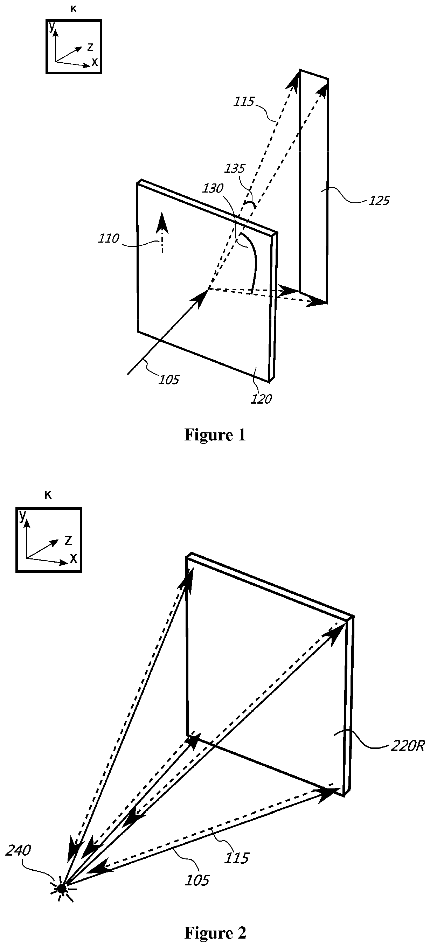

Autostereoscopic displays control light path such that they create viewing slits (325), through which different perspectives of the stereo image are observed, in different spatial positions. There are several different ways to control light path for autostereoscopic displays. One of them is relaying the projected image onto a slit shaped exit pupil (325), by a transfer screen (320) which both diffuses in a single axis and images at the same time. The transfer screen (320) examples can be seen in Patents US7874678, and US7993016B2. The transfer screen (320) can be thought as a special imaging system which consists of a single axis light diffuser (120) and an imaging lens (220). Figure 1 to 5 depicts the working principle of reflective type transfer screen (320) for front projection systems.

Figure 1 illustrates the effect of a single axis light diffuser (120) on an incident light ray (105). The single axis light diffuser (120) is characterized by diffusing angle in major axis (130), and diffusing angle in minor axis (135). Since the diffusing angle in major axis (130) is much greater than the diffusing angle in minor axis (135) for a single axis light diffuser (120), it diffuses light in major diffusing axis (110) much more than its orthogonal axis, minor diffusing axis. Thus, when incident light ray (105) passes through the single axis light diffuser (120), the output light rays (115) is diffused in line shape, and the diffused light (125) is parallel to the major diffusing axis (110) of the diffuser, as seen in Figure 1.

Figure 2 illustrates the imaging of a light source (240) by a reflective imaging lens (220R). In the illustration, the reflective imaging lens (220R) does one to one imaging, thus the light source (240) and its image (245) are at the same spatial position. In Figure 2, the image of light source (240) is not illustrated for the sake of simplicity. A retro-reflector is an example for a one-to-one reflective imaging lens (220R), illustrated in Figure 2.

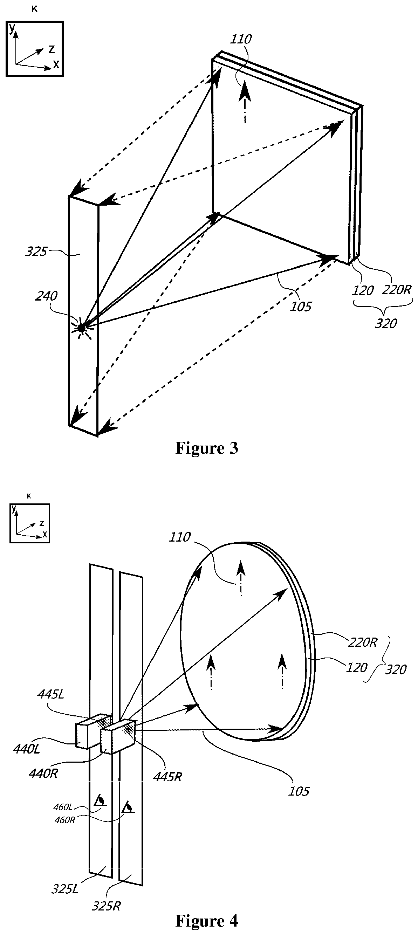

Figure 3 illustrates the formation of viewing slit (325) by a transfer screen (320). The transfer screen (320) consists of a single axis light diffuser (120), illustrated in Figure 1 and a reflective imaging lens (220R), illustrated in Figure 2. Light rays (105) from the light source (240) hits on the transfer screen (320), and transfer screen (320) forms a slit shaped exit pupil (325), so called a viewing slit (325), in which lights from light source (240) are collected. As seen in Figure 3, the created viewing slit (325) is parallel to the major diffusing axis (110) of transfer screen (320) and it is anchored by its center to a virtual anchor point, which is the spatial position of image of light source (240). Since imaging lens (220R) in the transfer screen (320) does one-to-one imaging, the image of light source (240) and light source itself (240) are in the same spatial positions.

Figure 4 illustrates the formation of viewing slit pair (325R, 325L), through which stereo image can be perceived. In Figure 4, two projectors (440L, 440R) are used as light sources (240), and they are placed apart from each other by an average human interpupillary distance. One of projectors, right eye projector (440R), projects right eye image of stereo image pair, and the other, left eye projector (440L), projects left eye image of stereo image pair onto the transfer screen (320). The transfer screen (320) forms two viewing slits, right and left eye viewing slits (325R, 325L), through which right and left eye image of stereo image pair are presented, respectively.

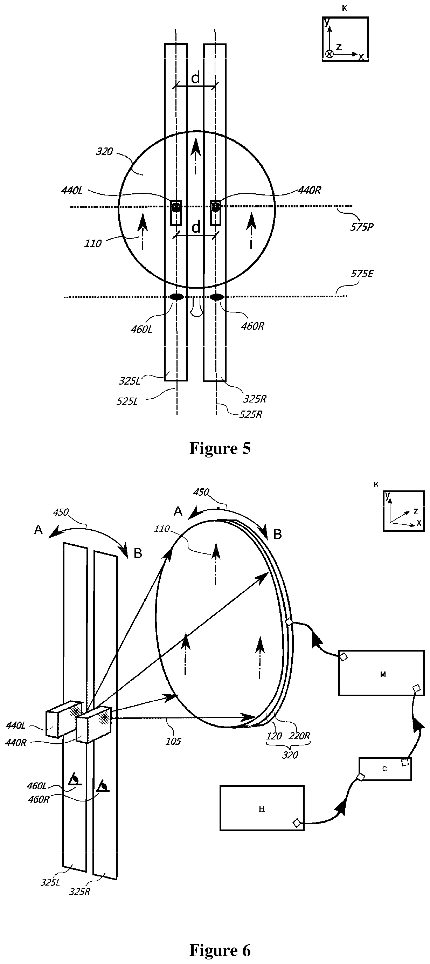

Figure 5 is the front view of the system, illustrated in Figure 4, when the major diffusing axis (110) of transfer screen (320) is parallel to the y axis. Since two projectors (440R, 440L) are placed apart from each other by interpupillary distance, d, the distance between the center line of viewing slits (525R, 525L) is interpupillary distance, d, as seen in Figure 5. Thus, eyes of the viewer (460R, 460L) fit into viewing slits (325R, 325L), and viewer (460) perceives stereo images, as long as viewer's eyes (460R, 460L) are aligned on an axis (575E) which is parallel to the axis of projectors (575P).

## 2) The present invention

Figure 6 illustrates one of the preferred embodiments of the present invention for a front projection system. The preferred embodiment consists of two projectors (440R, 440L), a transfer screen (320), a mechanical unit (M), which rotates the transfer screen (320) around its center, a head-tracker unit (H), which locates the position of viewer's eyes (460R, 460L), and a control electronics (C), which processes the information obtained by the head-tracker unit (H), and controls the mechanical unit (M).

In the preferred embodiment, two projectors (440R, 440L) are placed apart from each other by interpupillary distance, d, as in Figure 4, and 5. One of projectors, right eye projector (440R), projects right eye image of stereo image pair, and the other, left eye projector (440L), projects left eye image of stereo image pair onto transfer screen (320).

In the preferred embodiment, the transfer screen (320) is a special imaging system which can relay projected images by projectors (440R, 440L) onto slit shaped exit pupils (325R, 325L), as explained through Figure 1 to 5. There are various transfer screens which can form slit shaped exit pupil (325R, 325L) according to the preferred embodiment. The transfer screen (320) can be a retro-reflective vertical light diffusing screen, which consists of a retro-reflector, and a single axis light diffusing screen, as explained in US7993016B2, or a lenticular screen with a reflective surface on the backside of it, as explained in US7874678, or a reflective fresnel lens with a single axis light diffusing screen in front of it. In the preferred embodiment, transfer screen (320) is in the vertical plane, x-y plane, but in another embodiment it can be in any plane, such as x-z plane. In the preferred embodiment, transfer screen (320) in circular shape, but in another embodiment it can be in any shape, such as rectangular.

The mechanical unit (M), in the preferred embodiment, is any system which rotates the transfer screen (320) around its center. The mechanical unit (M) can be a servo motor which is connected to transfer screen (320) either by the transfer screen's center, or by gears surrounding the transfer screen (320).

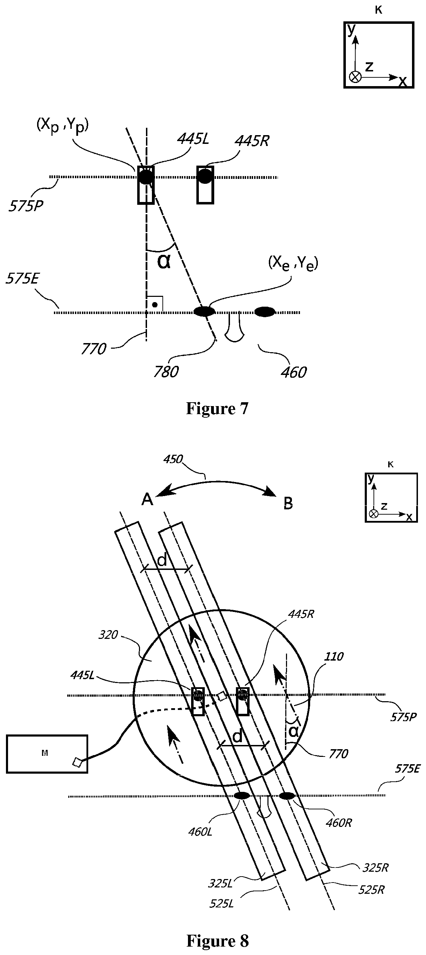

In the preferred embodiment, the head-tracker unit (H) locates eyes of the viewer (460R, 460L), and feeds the position information of viewer's eyes (460R, 460L) to the control electronics (C). The control electronics (C) calculates the angular position of eyes (460R, 460L) relative to the position of projectors (445R, 445L). The calculation of the angular position will be examined through Figure 7 which illustrates a simple view from the head-tracker unit (H). The positions of projectors, $(X_1p.Y_1p)$, are always fixed in the preferred embodiment, and they are known by the control electronics (C). Since the positions of viewer's eyes, $(X_B, Y_B)$, and the position of projectors, $(X_p, Y_p)$, are known by the control electronics (C), the control electronics (C) calculates the angular position of the viewer (460), which is the angle, $\alpha$, between reference axis (770) and projector-eye axis (780) as in Equation 1. The reference axis (770) is the axis which is perpendicular to the axis of projectors (575P), and the projector-eye axis (780) is the axis on which one of viewer's eyes and the corresponding projector, (445L-460L pair or 445R-460R pair), are aligned.

$$\alpha = \arctan\left(\frac{X_e - X_p}{Y_e - Y_p}\right)$$

After the calculation of angle, $\alpha$, between reference axis (770) and projector-eye axis (780), the mechanical unit (M) rotates the transfer screen (320) around its center, such that the angle between major diffusing axis (110) of transfer screen (320) and reference axis (770), is also angle of $\alpha$. Thus, as seen in Figure 8, right and left eye viewing slits (325R, 325L) are present on the spatial position of right and left eye of viewer (460R, 460L), respectively. Since a viewing slit (325) has a virtual anchor point, which is the image of projection lens of the corresponding projector (445), rotation of transfer screen (320) doesn't change the interpupillary distance between the center lines of viewing slits (325R, 325L), along the axis of projectors (575P), and eyes of the viewer (460R, 460L) can fit into viewing slits (325R, 325L) as long as eyes of the viewer (460R, 460L) are aligned on an axis (575E) which is parallel to the axis of projectors (575P), as seen in Figure 8.

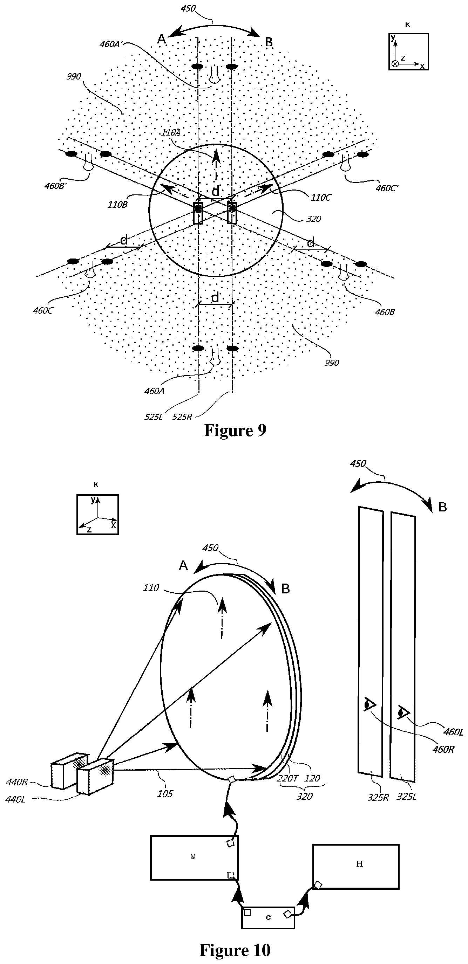

In the preferred embodiment, locating the position of viewer's eyes (460R, 460L), and rotating the transfer screen (320), according to the position of viewer (460), are done in real time. Thus, viewing slits (325R, 325L) dynamically track the eyes of the viewer (460R, 460L), and the viewer (460) perceives stereo images without wearing any glasses, or so, in a large viewing field (990), as illustrated in Figure 9. Figure 9 is an illustration of 6 different cases for the position of viewer (460), and corresponding positions of viewing slits (325R, 325L). In Figure 9, for the sake of simplicity, only center lines of the viewing slits (525R, 525L) are shown.

Figure 10 illustrates an another embodiment of the present invention for a back projection system. As depicted in Figure 10, transfer screen (320) consists of a transmissive imaging lens (220T), and a single axis light diffuser (120). Since the imaging lens is transmissive, rather than reflective, viewer space and projector space are in the opposite sides of the transfer screen (320).

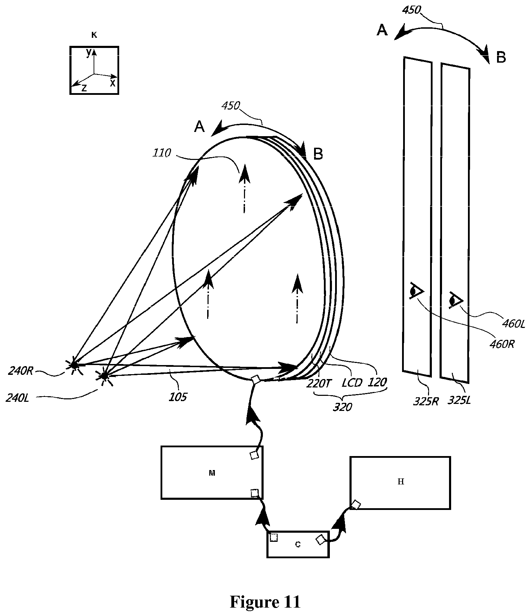

Figure 11 illustrates another embodiment of present invention, which employs two light sources (240R, 240L) and an active transfer screen (320). The active transfer screen (320) consists of a layer, such as LCD, which generates image information, a single axis light diffuser (120), and an imaging lens (220T). Two light sources (240) turn on and off alternately. When right eye light source (240R) is on, LCD generates right eye image of stereo image pair. When left eye light source (240) is on, LCD generates left eye image of stereo image pair. In this preferred embodiment, only the single axis light diffuser (120) of the transfer screen is rotated around its center.

**Claims**

1.   A device adapted to provide 3D images to a viewer (460) according to the viewer's position **comprising;**

- at least two light sources (440R, 440L) creating substantially overlapping illumination areas on a transfer screen (320) to present images;
- wherein the transfer screen (320), diffusing incident light in one axis, creating slit shaped exit pupils (325R, 325L) which are parallel to the major diffusing axis (110) of the transfer screen (320) and coupled with each light source (440R, 440L);

**characterized by;**

- a head-tracker unit (H) locating the position of viewer's eyes (460R, 460L);
- a mechanical unit (M) rotating the transfer screen (320) in-plane, around the transfer screen (320) center;
- control electronics (C) coupled to the head-tracker unit (H) and the mechanical unit (M) wherein the control electronics (C) rotate the transfer screen (320) through the mechanical unit (M) according to position information of the viewer's eyes (460R, 460L) fed by the head-tracker unit (H) such that the slit shaped exit pupils (325R, 325L) are also rotated and dynamically track the movements of the viewer's eyes (460R, 460L).

2.   The device according to claim 1, **characterized in that** the light sources (440R, 440L) are a projector projecting images on the transfer screen (320).

3.   The device according to claim 1, **characterized in that** the light sources (440R, 440L) are placed apart from each other by interpupillary distance wherein the spacing between each slit shaped exit pupils (325R, 325L) is matching the interpupillary distance of the viewer (460).

4.   The device according to claim 1, **characterized in that** the slit shaped exit pupils (325R, 325L) and the light sources (440R, 440L) are on the same side of the transfer screen (320).

5.   The device according to claim 1, **characterized in that** the slit shaped exit pupils (325R, 325L) and the light sources (440R, 440L) are on opposite sides of the transfer screen (320).

6.   The device according to claim 1, **characterized in that** the transfer screen (320) is an active screen comprising an image generating layer, a single axis light diffuser (120) diffusing the light in single axis, and an imaging lens (220) doing one to one imaging.

7.   The device according to claim 6, **characterized in that** the image generating layer is a Liquid Crystal Display.

8. The device according to claim 6, **characterized in that** the imaging lens (220) is a retro-reflector.

9. The device according to claim 6, **characterized in that** light sources (440R, 440L) turn on and off alternately such that when the right eye light source (240R) is on, image generating layer displays the right eye image of the stereo image pair, when the left eye light source (240L) is turned on, image generating layer displays the left eye image of the stereo image pair, wherein the mechanical unit (M) rotates only the diffuser element (120) of the transfer screen (320) while the image generating layer is kept stationary.

**Patentansprüche**

1. Eine Vorrichtung, die angepasst ist, 3D-Bilder für einen Betrachter (460) nach der Position des Betrachters bereitzustellen, **umfassend,**

   - mindestens zwei Lichtquellen (440R, 440L), die wesentlich überlappende Beleuchtungsbereiche auf einem Transferbildschirm (320) erzeugen, um die Bilder zu zeigen;
   - wobei der Transferbildschirm (320), welcher das einfallende Licht in einer Achse verbreitet, Austrittspupillen in Form von Schlitzen (325R, 325L) ausbildet, welche zu einer Haupt-Verbreitungs-Achse (110) des Transferbildschirms (320) parallel und mit jeder Lichtquelle (440R, 440L) verbunden sind;

   **gekenzeichnet durch;**

   - eine die Position der Augen des Beobachters (460R, 460L) aufsuchende Head-Tracker-Einheit (H);
   - eine mechanische Einheit (M), die den Transferbildschirm (320) auf einer geraden Ebene um die Mitte des Transferbildschirms (320) dreht;
   - die Steuerelektronik (C), die an der Head-Tracker-Einheit (H) und der mechanischen Einheit (M) angeschlossen ist, wobei die Steuerelektronik (C) den Transferbildschirm (320) durch die mechanische Einheit (M) nach der Positions-Information der Augen von Beobachter (460R, 460L) dreht, die durch die Head-Tracker-Einheit (H) so gespeist ist, dass die Austrittspupillen in Form von Schlitzen (325R, 325L) auch gedreht werden und die Bewegung der Augen des Beobachters (460R, 460L) dynamisch verfolgen.

2. Vorrichtung gemäß Anspruch 1, **dadurch gekennzeichnet, dass** die Lichtquellen (440R, 440L) die Bilder auf den Transferbildschirm (320) projizierende Projektoren sind.

3. Vorrichtung gemäß Anspruch 1, **dadurch gekennzeichnet, dass** die Lichtquellen (440R, 440L) mit dem Pupillenabstand voneinander getrennt angeordnet sind, wobei die Lücke jeweils zwischen Austrittspupillen in Form von Schlitzen (325R, 325L) dem Pupillenabstand des Beobachters (460) entspricht.

4. Vorrichtung gemäß Anspruch 1, **dadurch gekennzeichnet, dass** die Austrittspupillen in Form von Schlitzen (325R, 325L) und die Lichtquellen (440R, 440L) auf der gleichen Seite des Übertragungsbildschirms (320) sind.

5. Vorrichtung gemäß Anspruch 1, **dadurch gekennzeichnet, dass** die Austrittspupillen in Form von Schlitzen (325R, 325L) und die Lichtquellen (440R, 440L) auf der gegenüberliegenden Seite des Übertragungsbildschirms (320) sind.

6. Vorrichtung gemäß Anspruch 1, **dadurch gekennzeichnet, dass** der Transferbildschirm (320) ein aktiver Bildschirm ist, der eine Bilderzeugungs-Schicht, einen einachsigen Lichtschirm (120), der das Licht in einer einzigen Achse verbreitet und eine Eins-zu-Eins -Abbildung ausführende Abbildungs-Linse (220) aufweist.

7. Vorrichtung gemäß Anspruch 6, **dadurch gekennzeichnet, dass** die Bilderzeugungs-Schicht eine Flüssigkristallanzeige (LCD) ist.

8. Vorrichtung gemäß Anspruch 6, **dadurch gekennzeichnet, dass** Abbildungs-Linse (220) ein Retroreflektor ist.

9. Vorrichtung gemäß Anspruch 6, **dadurch gekennzeichnet, dass** die Lichtquellen (440R, 440L) alternierend ein- und ausgeschaltet werden, so dass die Bilderzeugungs-Schicht das rechte Augenbild des Stereobildpaares anzeigt wenn die rechte Augenlichtquelle (240R) eingeschaltet ist, aber Bilderzeugungs-Schicht das linke Augenbild des Stereobildpaares anzeigt wenn die linke Augenlichtquelle (240L) eingeschaltet ist, wobei die mechanische Einheit (M) nur das lichtstreuende Element (120) des Transferbildschirms (320) dreht, während die Bilderzeugungsschicht stationär gehalten wird.

**Revendications**

1.  Un dispositif adapté pour fournir des images 3D à un spectateur (460) selon la position du spectateur **comprenant:**

    au moins deux sources de lumière (440R, 440L) créant des zones d'illumination substantiellement superposées sur un écran de transfert (320) pour présenter des images;
    dans lequel l'écran de transfert (320), diffusant la lumière incidente dans un axe,
    créant des pupilles de sortie en forme de fente (325R, 325L) parallèles à l'axe de diffusion majeur (110) de l'écran de transfert (320) et couplées à chaque source de lumière (440R, 440L); **caractérisé par;**

    une unité de suivi de piste (H) localisant la position des yeux du spectateur (460R, 460L);
    une unité mécanique (M) faisant tourner l'écran de transfert (320) dans le plan, autour du centre de transfert (320);
    l'électronique de commande (C) couplée à l'unité de suivi de piste (H) et à l'unité mécanique (M) dans laquelle l'électronique de commande (C) fait tourner l'écran de transfert (320) à travers l'unité mécanique (M) en fonction des informations de position des yeux du spectateur (460R, 460L) alimentés par l'unité de suivi de piste (H) de telle sorte que les pupilles de sortie en forme de fente (325R, 325L) sont également tournées et suivent dynamiquement les mouvements des yeux du spectateur (460R, 460L).

2.  Dispositif selon la revendication 1, **caractérisé en ce que** les sources de lumière (440R, 440L) sont des projecteurs projetant des images sur l'écran de transfert (320).

3.  Dispositif selon la revendication 1, **caractérisé en ce que** les sources de lumière (440R, 440L) sont séparées l'une de l'autre par une distance interpupillaire dans laquelle l'espacement entre chaque pupille de sortie en forme de fente (325R, 325L) correspond à la distance interpupillaire du spectateur (460).

4.  Dispositif selon la revendication 1, **caractérisé en ce que** les pupilles de sortie en forme de fente (325R, 325L) et les sources de lumière (440R, 440L) sont sur le même côté de l'écran de transfert (320).

5.  Dispositif selon la revendication 1, **caractérisé en ce que** les pupilles de sortie en forme de fente (325R, 325L) et les sources lumineuses (440R, 440L) sont sur les côtés opposés de l'écran de transfert (320).

6.  Dispositif selon la revendication 1, **caractérisé en ce que** l'écran de transfert (320) est un écran actif comprenant une couche génératrice d'image, un diffuseur de lumière à un seul axe (120) diffusant la lumière en un seul axe, et une lentille d'imagerie (220) effectuant une imagerie individuelle.

7.  Dispositif selon la revendication 6, **caractérisé en ce que** la couche de génération d'image est un affichage à cristaux liquides.

8.  Dispositif selon la revendication 6, **caractérisé en ce que** la lentille d'imagerie (220) est un rétro-réflecteur.

9.  Dispositif selon la revendication 6, **caractérisé en ce que** les sources de lumière (440R, 440L) s'allument et s'éteignent alternativement de sorte que lorsque la source de lumière d'oeil droit (240R) est allumée, la couche de génération d'image affiche l'image de l'oeil droit de la paire d'images stéréo, lorsque la source de lumière de l'oeil gauche (240L) est allumée, la couche de génération d'image affiche l'image de l'oeil gauche de la paire d'images stéréo, dans lequel l'unité mécanique (M) tourne uniquement l'élément diffuseur (120) de l'écran de transfert (320) alors que la couche génératrice d'image est maintenue stationnaire.

**Figure 1**

**Figure 2**

**Figure 3**

**Figure 4**

Figure 5

Figure 6

Figure 7

Figure 8

**Figure 9**

**Figure 10**

**Figure 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6459532 B
- US 6069650 A
- US 7874678 B
- US 5703717 A
- US 7699472 B2
- US 7993016 B2
- EP 2061261 A